# EUROPÄISCHE PATENTSCHRIFT

(11) **EP 2 102 016 B1**
(45) Veröffentlichungstag und Bekanntmachung des Hinweises auf die Patenterteilung: **15.06.2011**
(21) Anmeldenummer: 07847974.8
(22) Anmeldetag: 07.12.2007
(51) Int. Cl.: B42D 15/00

(54) **DOKUMENT MIT EINEM SICHERHEITSMERKMAL UND LESEGERÄT**
DOCUMENT HAVING A SECURITY FEATURE AND READER
DOCUMENT DOTÉ D'UNE CARACTÉRISTIQUE DE SÉCURITÉ ET APPAREIL DE LECTURE

(30) Priorität: 15.12.2006 DE 102006059865
(43) Veröffentlichungstag der Anmeldung: 23.09.2009
(73) Patentinhaber: Bundesdruckerei GmbH, 10958 Berlin (DE)
(72) Erfinder: PFLUGHOEFFT, Malte, 13347 Berlin (DE); FISCHER, Jörg, 13053 Berlin (DE); LEOPOLD, André, 10119 Berlin (DE); KUNATH, Christian, 12203 Berlin (DE)
(74) Vertreter: Richardt Patentanwälte
(86) Internationale Anmeldenummer: PCT/EP2007/063517
(87) Internationale Veröffentlichungsnummer: WO 2008/071634

(56) Entgegenhaltungen:
- EP-A- 1 562 141
- WO-A-00/36560
- WO-A-03/089250
- DE-A1- 19 961 841

## Beschreibung

Die Erfindung betrifft ein Dokument mit einem Sicherheitsmerkmal, insbesondere ein Wert- oder Sicherheitsdokument, sowie ein Lesegerät für ein solches Dokument.

Aus dem Stand der Technik sind verschiedene Sicherheitsmerkmale für Wert- oder Sicherheitsdokumente bekannt. Dazu gehören optische Sicherheitsmerkmale, die visuell durch einen Benutzer und/oder maschinell durch einen optischen Sensor erfassbar sind.

Zu den optischen Sicherheitsmerkmalen zählen beispielsweise:
- Guillochen: Guillochen werden mit Hilfe von so genanntem Liniendruck auf das Dokument aufgedruckt. Sie bestehen im Allgemeinen aus in verschiedenen Farben übereinander gedruckten Wellen- und Schleifenmustern;
- Mikro-Schrift: Hierbei handelt es sich um aufgedruckte Schriftzüge in kleinster Schrift. Mit bloßem Auge lässt sich die Mikro-Schrift kaum erkennen. Beispielsweise ist Mikro-Schrift auf den Euro-Banknoten als Bildelemente in die Motive eingearbeitet. Mit Hilfe einer Lupe kann die Mikro-Schrift gelesen werden;
- Metamere Systeme: Aufgrund metamerer Farbgleichheit können unterschiedliche spektrale Zusammensetzungen des Lichts bei Menschen den gleichen Farbeindruck hervorrufen;
- Aufdrucke mit Fluoreszenz, Phosphoreszenz und/oder Up-Conversion-Farben;
- Aufdrucke mit Infrarot-Farbe: Die Farbe wird nur unter Infrarot-Strahlung für Lesegeräte mit entsprechenden Sensoren sichtbar. Beispielsweise sind Euro-Banknoten mit diesem optischen Sicherheitsmerkmal ausgestattet;
- Barcodes, insbesondere ein- oder zweidimensionale Barcodes;
- Optisch variable Farben (OVI - Optimal Variable Ink): Bei einer optisch variablen Farbe ändert sich der Farbeindruck je nach Betrachtungswinkel, da das Licht an den Pigmenten gebrochen, gestreut oder reflektiert wird;
- Hologramme und Kinegramme (transparent oder reflektierend);
- Wasserzeichen, insbesondere digitale Wasserzeichen, die eine maschinell auslesbare Information tragen;
- Passerdruck: Verschiedene Muster oder Symbole werden so über- oder aneinander gedruckt, dass sie zusammen ein bestimmtes Bild ergeben. Kleinste Abweichungen im Stand, d.h. so genannte Passerungenauigkeiten, können leicht mit bloßem Auge erkannt werden. Wenn sich die Teilbilder auf verschiedenen Seiten des Dokuments, wie zum Beispiel einer Banknote, befinden, bezeichnet man dieses optische Sicherheitsmerkmal als Durchsichtspasser;
- Durchsichtsfenster: Ein Fenster aus einer transparenten Kunststofffolie ist in dem Dokument eingearbeitet;
- Melierfasern: Dem Papier des Dokuments werden Fasern beigemischt, die unter UV-Licht in verschiedenen Farben leuchten;
- Sicherheitsfaden;
- Mikroperforation.

Aus der WO 00/36560 ist ein Dokument mit einer Anzeige bekannt, die nur sichtbar wird, wenn ein elektrisches Signal angelegt wird. Dies kann voraussetzen, dass ein Nutzer einen Code eingibt.

Aus WO 03/089250 A2 ist ein Sicherheitsdokument mit einem Sicherheitselement bekannt, dessen optische Eigenschaften durch ein elektrisches oder magnetisches Feld modifizierbar sind. Hierdurch kann das Sicherheitselement von einem optischen Zustand in einen anderen optischen Zustand geschaltet werden.

Aus DE 199 61 841 A1 ist ein fälschungssicheres Informationsträgermaterial bekannt. Ein Informationsträger wird mit zwei langzeitstabile Zustände aufweisenden fotochromen Substanzen dotiert und durch Lichteinstrahlung initialisiert. Aus EP 1 562 141 A1 ist ein Wertdokument mit einer Anzeigevorrichtung bekannt, die von einem in das Wertdokument integriertem elektronischen Schaltkreis angesteuert wird.

Der Erfindung liegt demgegenüber die Aufgabe zugrunde, basierend auf solchen an sich vorbekannten optischen Sicherheitsmerkmalen ein verbessertes Dokument zu schaffen sowie ein Lesegerät für ein solches Dokument.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Durch die Erfindung wird ein Dokument mit einem optischen Sicherheitsmerkmal geschaffen, wie zum Beispiel ein Wert- oder Sicherheitsdokument, insbesondere ein Zahlungsmittel, eine Chipkarte, ein Ausweisdokument, ein Berechtigungsnachweis oder dergleichen. Das Dokument kann papierbasiert und/oder kunststoffbasiert ausgeführt sein.

Das erfindungsgemäße Dokument hat ein optisches Element, das zwischen einem ersten, im Wesentlichen nicht-transparenten Zustand und einem zweiten, im Wesentlichen transparenten Zustand schaltbar ist. Das optische Element ist so auf oder in dem Dokument angeordnet, dass es in seinem ersten Zustand einen optischen Zugriff auf das Sicherheitsmerkmal verhindert.

Beispielsweise überdeckt also das optische Element das Sicherheitsmerkmal, sodass das Sicherheitsmerkmal für einen Benutzer nicht sichtbar ist, so lange sich das optische Element in seinem ersten, im Wesentlichen nicht-transparenten Zustand befindet. Zur Überprüfung des Sicherheitsmerkmals ist es also erforderlich, zunächst das optische Element in seinem zweiten, im Wesentlichen transparenten Zustand zu bringen. Durch diese Notwendigkeit ist ein weiteres Sicherheitsmerkmal gegeben, da die Prüfung des optischen Sicherheitsmerkmals des Dokuments ja voraussetzt, dass der Benutzer z.B. mit Hilfe eines Lesegeräts dazu in der Lage ist, das optische Element in seinen zweiten, im Wesentlichen transparenten Zustand zu bringen.

Nach einer Ausführungsform der Erfindung ist das optische Element durch Einkopplung von Energie von seinem ersten in seinen zweiten Zustand schaltbar. Die Einkopplung der Energie kann je nach Ausführungsform des optischen Elements unmittelbar, zum Beispiel durch ein elektromagnetisches Feld, in das optische Element erfolgen, sodass dieses in seinen zweiten, im Wesentlichen transparenten Zustand gebracht wird. Die Einkopplung der Energie kann aber auch über ein separates Kopplungselement erfolgen, wie zum Beispiel eine kontaktbehaftete, kontaktlose oder Dual-Mode-Schnittstelle, insbesondere eine Chipkarten-Schnittstelle oder eine RFID-Schnittstelle. Bei dem Kopplungselement kann es sich zum Beispiel um eine Antenne oder eine Spule handeln, beispielsweise zur induktiven Einkopplung einer Spannung, die das optische Element in seinen zweiten, im Wesentlichen transparenten Zustand schaltet.

Nach einer Ausführungsform der Erfindung ist das optische Element bistabil, d.h. das optische Element verharrt In seinem jeweiligen Zustand, so lange es nicht geschaltet wird. Für ein solches bistabiles optisches Element ist es also erforderlich, dass dieses aus seinem zweiten, im Wesentlichen transparenten Zustand nach Inspektion des optischen Sicherheitsmerkmals wieder in seinen ersten, im Wesentlichen nicht-transparenten Zustand zurückgeschaltet wird. Dies kann durch einen entsprechenden Schaltkreis des Dokuments erfolgen und/oder durch erneute Einkopplung von Energie, beispielsweise von einem externen Lesegerät

Nach einer Ausführungsform der Erfindung ist das optische Element semi-bistabil. Das optische Element verharrt also in seinem ersten, im Wesentlichen nicht-transparenten Zustand. Nachdem das optische Element in seinen zweiten, im Wesentlichen transparenten Zustand geschaltet worden ist, verharrt es in diesem zweiten Zustand für eine bestimmte Zeit, bevor es dann selbsttätig wieder in den ersten, im Wesentlichen nicht-transparenten Zustand zurückfällt. Diese Ausführungsform hat den Vorteil, dass nur eine einzige Schalthandlung erforderlich ist, um das optische Element für einen bestimmten Zeitraum für die Inspektion des optischen Sicherheitsmerkmals des Dokuments in seinen zweiten, im Wesentlichen transparenten Zustand zu versetzen, aus dem es dann ohne weitere Schalthandlung selbsttätig wieder in den ersten Zustand zurückfällt.

Nach einer Ausführungsform der Erfindung beinhaltet das optische Element eine bistabile Drehelement-Anzeige mit Drehelementen, die in einer ersten Drehposition Licht absorbierend wirken und in einer zweiten Drehposition lichtdurchlässig sind, sodass das optische Sicherheitsmerkmal des Dokuments verdeckt wird, wenn sich die Drehelemente in deren ersten Drehpositionen befinden.

Nach einer Ausführungsform beinhaltet das optische Element eine elektrophoretische oder elektrochrome Anzeigevorrichtung.

Nach einer Ausführungsform der Erfindung beinhaltet das optische Element ein elektrostatisches Benetzungselement, d.h. eine so genannte Elektrowetting-Anzeigevorrichtung.

Nach einer Ausführungsform der Erfindung beinhaltet das optische Element eine Flüssigkristall-Anzeigevorrichtung, insbesondere mit cholesterischen oder nematischen flüssigkristallinen Materialien.

Nach einer Ausführungsform der Erfindung beinhaltet das optische Element ein flexibles Display, wie es z.B. von der Firma Citala (http://www.citala.com) erhältlich ist.

Nach einer Ausführungsform der Erfindung beinhaltet das optische Element ein mikroelektromechanisches System (MEMS), wie z.B. ein Mikroshutter-Array, wie es beispielsweise von der Firma Flixel Ltd (www.flixel.com) erhältlich ist.

Nach einer Ausführungsform der Erfindung beinhaltet das optische Element eine Anzeigevorrichtung auf der Basis ferroelektrischer Materialien.

Die Anzeigevorrichtung, welche das optische Element bildet, kann zum Beispiel matrixförmige Anzeigeelemente beinhalten. Die Anzeigeelemente müssen jedoch nicht individuell angesteuert werden, sondern es reicht eine kollektive Ansteuerung der Anzeigeelemente aus, um diese jeweils in den ersten, im Wesentlichen nicht-transparenten Zustand oder den zweiten, im Wesentlichen transparenten Zustand zu versetzen.

Nach einer Ausführungsform der Erfindung handelt es sich bei dem optischen Sicherheitsmerkmal des Dokuments um eine Guilloche, Mikro-Schrift, ein metameres System, einen Aufdruck mit Fluoreszenz, Phosphoreszenz und/oder Up-Conversion-Farbe, einen Aufdruck mit Infrarot-Farbe, Optisch variable Farben (OVI - Optical Variable Ink), ein Hologramm oder Kinegramm (transparent oder reflektierend), ein Wasserzeichen, Passerdruck, ein Durchsichtsfenster, Melierfasem, einen Sicherheitsfaden und/oder eine Mikroperforationen.

Nach einer Ausführungsform der Erfindung beinhaltet das Sicherheitsmerkmal optisch auslesbare Informationen. Beispielsweise handelt es sich bei dem Sicherheitsmerkmal um ein digitales Wasserzeichen oder einen ein- oder zweidimensionalen Barcode. Das Wasserzeichen bzw. der Barcode können auf dem Dokument aufgedruckt sein.

Nach einer Ausführungsform der Erfindung wird das Sicherheitsmerkmal durch einen optischen Datenspeicher gebildet, insbesondere einen holographischen Datenspeicher.

Nach einer Ausführungsform der Erfindung speichert das Sicherheitsmerkmal biometrische Daten, wie zum Beispiel Fingerabdruckdaten und/oder Iris-Scan-Daten. Beispielsweise handelt es sich bei dem Dokument um ein maschinenlesbares Reisedokument (Machine Readable Travel Document - MRTD), insbesondere nach einem ICAO- (Intemational Civil Aviation Organisation) Standard. Bei den biometrischen Daten kann es sich um die biometrischen Daten des Trägers des MRTD handeln.

Nach einer Ausführungsform der Erfindung beinhaltet das Dokument einen integrierten elektronischen Schaltkreis zur Ansteuerung des optischen Elements, um dieses von seinem ersten in den zweiten Zustand zu überführen, und um es erforderlichenfalls aus seinem zweiten Zustand wieder in den ersten Zustand zu überführen, nachdem ein optischer Zugriff auf das Sicherheitsmerkmal stattgefunden hat. Der integrierte elektronische Schaltkreis kann eine Schnittstelle aufweisen oder mit einer Schnittstelle verbunden sein, über die die Energie zum Betrieb des integrierten elektronischen Schaltkreises sowie zur Ansteuerung des optischen Elements kontaktlos oder kontaktbehaftet eingekoppelt wird. Insbesondere kann es sich bei der Schnittstelle um eine Chipkarten- oder RFID-Schnittstelle handeln.

Nach einer Ausführungsform der Erfindung ist der integrierte elektronische Schaltkreis zur Authentisierung eines Lesegeräts ausgebildet. Hierdurch soll sichergestellt werden, dass nur von hierzu autorisierten Stellen ein Zugriff auf das Sicherheitsmerkmal erfolgen kann. Zur Authentifizierung des Lesegeräts gegenüber dem integrierten elektronischen Schaltkreis des Dokuments wird beispielsweise ein kryptographisches Protokoll durchgeführt, beispielsweise mit Hilfe eines so genannten Challenge-Response-Verfahrens mit symmetrischen und/oder asymmetrischen Schlüsseln.

Insbesondere erfolgt die Authentifizierung des Lesegeräts gegenüber dem integrierten elektronischen Schaltkreis nach einem so genannten Extended Access Control (EAC) Verfahren, wie es beispielsweise von der ICAO standardisiert wird. Erst nach erfolgreicher Authentisierung des Lesegeräts gegenüber dem integrierten elektronischen Schaltkreis schaltet dieser das optische Element für einen bestimmten Zeitraum in dessen zweiten, im Wesentlichen transparenten Zustand, um so einen optischen Zugriff des Lesegeräts und/oder einen visuellen Zugriff eines Benutzers auf das Sicherheitsmerkmal zu ermöglichen.

Nach einer Ausführungsform der Erfindung hat der integrierte elektronische Schaltkreis einen elektronischen Speicher, in dem schutzbedürftige Daten gespeichert sind. Bei den schutzbedürftigen Daten kann es sich zum Beispiel um persönliche oder vertrauliche Daten eines Trägers des Dokuments handeln, insbesondere um biometrische Daten, wie Fingerabdruckdaten und/oder lris-Scan-Daten. Eine Übertragung dieser schutzbedürftigen Daten aus dem elektronischen Speicher des integrierten elektronischen Schaltkreises über dessen Schnittstelle an das externe Lesegerät ist nur nach zuvoriger erfolgreicher Authentisierung des Lesegeräts gegenüber dem integrierten elektronischen Schaltkreis möglich.

Das Sicherheitsmerkmal kann als optischer Datenspeicher ausgebildet sein, welcher zur Speicherung von Daten dient, die den vertrauenswürdigen Daten des elektronischen Speichers gleichen, diesen entsprechen und/oder diese ergänzen. Beispielsweise lassen sich die in dem elektronischen Speicher gespeicherte Daten durch eine vorgegebene Transformationsvorschrift in die in dem optischen Speicher des Sicherheitsmerkmals gespeicherten Daten überführen. Bei den in dem elektronischen Speicher gespeicherten Daten kann es sich auch um eine Kopie zumindest eines Teils der in dem optischen Speicher des Sicherheitsmerkmals gespeicherten Daten handeln. Dar über hinaus können weitere Daten in dem optischen Speicher gespeichert sein.

Zur Überprüfung des Sicherheitsmerkmals liest das Lesegerät die Daten aus dem elektronischen Speicher und die Daten aus dem optischen Speicher des Sicherheitsmerkmals aus, um die jeweiligen Daten auf Übereinstimmung zu prüfen. Diese Prüfung auf Übereinstimmung der Daten kann dadurch erfolgen, dass die Daten auf Identität über prüft werden, oder durch Prüfung, ob sich die Daten durch eine vorgegebene Transformationsvorschrift ineinander überführen lassen. Bei dieser Transformationsvorschrift kann es sich zum Beispiel um ein Entschlüsselungsverfahren handeln.

In einem weiteren Aspekt betrifft die Erfindung ein Lesegerät für ein erfindungsgemäßes Dokument.

Im Weiteren werden Ausführungsformen der Erfindung mit Bezugnahme auf die Zeichnungen näher erläutert. Es zeigen:
- Figur 1: ein Blockdiagramm einer ersten Ausführungsform eines erfindungsge- mäßen Dokuments,
- Figur 2: ein Blockdiagramm einer zweiten Ausführungsform eines erfindungs- gemäßen Dokuments,
- Figur 3.: ein Blockdiagramm einer dritten Ausführungsform eines erfindungsge- mäßen Dokuments mit einer Ausführungsform eines erfindungsgemä- ßen Lesegeräts,
- Figur 4: ein Flussdiagramm einer Ausführungsform eines erfindungsgemäßen Verfahrens bezüglich der Arbeitsweise des erfindungsgemäßen Doku- ments in der Ausführungsform der Figur 3,
- Figur 5: ein Flussdiagramm einer Ausführungsform eines erfindungsgemäßen Verfahrens bezüglich einer Arbeitsweise des Lesegeräts in der Ausfüh- rungsform der Figur 3.

Elemente der nachführenden Ausführungsformen, die einander entsprechen, sind mit denselben Bezugszeichen gekennzeichnet.

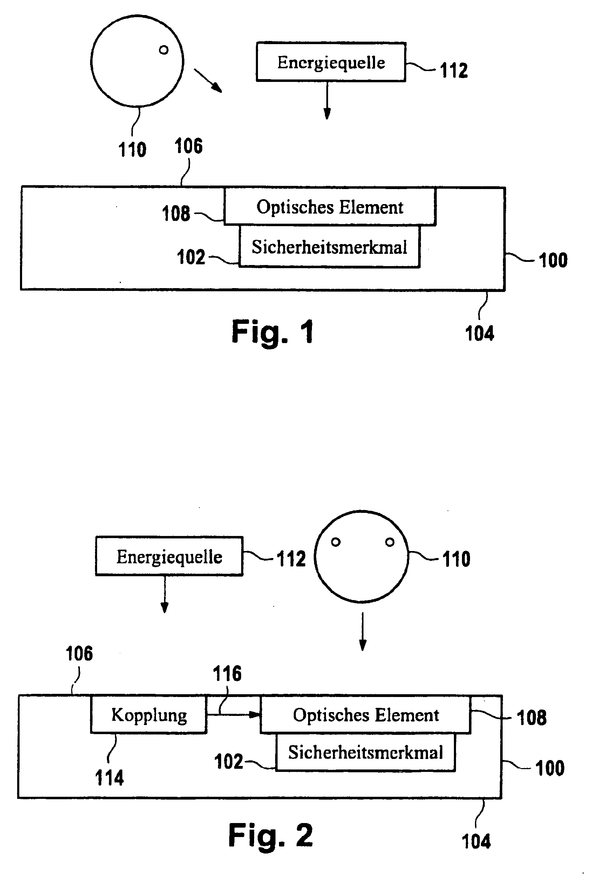

Die Figur 1 zeigt eine Ausführungsform eines erfindungsgemäßen Dokuments 100 in einer schematischen Schnittansicht. Das Dokument 100 hat ein Sicherheitsmerkmal 102, wobei es sich um ein beliebiges aus dem Stand der Technik bekanntes optisches Sicherheitsmerkmal handeln kann. Das Sicherheitsmerkmal 102 ist in den Körper des Dokuments 100 eingebettet, sodass es von der Rückseite 104 des Dokuments 100 nicht sichtbar ist. Die Rückseite 104 des Dokuments kann aber auch transparent ausgebildet sein, so dass das Sicherheitsmerkmal 102 von der Rückseite 104 sichtbar ist. Dies ist insbesondere dann vorteilhaft, wenn es sich bei dem Sicherheitsmerkmal 102 um einen Durchsichtspasser oder ein Durchsichtsfenster handelt.

An oder auf der Vorderseite 106 des Dokuments ist ein optisches Element 108 über dem Sicherheitsmerkmal 102 angeordnet, sodass das optische Element 108 das Sicherheitsmerkmal 102 vollständig überdeckt.

Das optische Element 108 hat einen ersten, im Wesentlichen nicht-transparenten Zustand. In seinem ersten Zustand absorbiert und/oder reflektiert das optische Element 108 einfallendes Licht und/oder einen optischen Lesestrahl eines Lesegeräts, sodass ein optischer Zugriff auf das darunter liegende Sicherheitsmerkmal 102 verhindert wird.

Das optische Element 108 kann durch Einkopplung von Energie in einen zweiten, im Wesentlichen transparenten Zustand überführt werden. In seinem zweiten Zustand ist das optische Element 108 für einfallendes Licht zumindest in einem bestimmten Frequenzbereich und/oder für den Lesestrahl eines Lesegeräts im Wesentlichen transparent, sodass das Licht bzw. der Lesestrahl das Sicherheitsmerkmal 102 erreichen kann, sodass dieses visuell von einem Benutzer 110 und/oder maschinell optisch von einem Lesegerät 112 erfasst werden kann, um es zu prüfen.

Das Lesegerät 112 kann als Energiequelle ausgebildet sein, von der aus Energie in das optische Element 108 eingekoppelt wird, um dieses zu schalten. Wenn es sich bei dem optischen Element 108 um ein semi-bistabiles optisches Element handelt, so kann ein einziger Energieimpuls ausreichen, um das optische Element 108 für einen bestimmten Zeitraum in seinen zweiten Zustand zu überführen, aus dem es dann selbsttätig nach Ablauf dieses Zeitraums in seinen ersten Zustand zurückkehrt. Handelt es sich bei dem optischen Element 108 dagegen um ein bistabiles optisches Element, so kann ein weiterer Energieimpuls erforderlich sein, um das optische Element aus seinem zweiten Zustand wieder in den ersten Zustand zu überführen.

Ferner kann das optische Element 108 auch so ausgebildet sein, dass eine ständige Einkopplung von Energie erforderlich ist, um das optische Element 108 in seinem zweiten Zustand zu halten. Wird die Zufuhr von Energie unterbrochen, so fällt das optische Element 108 in einer solchen Ausführungsform sofort wieder in seinen ersten Zustand zurück.

Beispielsweise kann das optische Element 108 als bistabile Drehelement-Anzeige ausgebildet sein oder als bistabile elektrophoretische Anzeige, wie sie z.B. aus WO 03/009059A1 an sich bekannt ist. Für eine semi-bistabile Ausführungsform beinhaltet das optische Element 108 eine Anzeigevorrichtung mit z.B. einem elektrochromen Display. Für eine Ausführungsform, bei der die ständige Zufuhr von Energie erforderlich ist, um das optische Element 108 in seinem zweiten Zustand zu halten, kann dieses eine LCD Anzeige beinhalten.

Beispielsweise beinhaltet das optische Element 108 elektrisch oder magnetisch geladene Drehelemente. Durch Abstrahlung eines entsprechenden elektromagnetischen Feldes von dem Lesegerät 102 können die Drehelemente so bewegt werden, dass das optische Element 108 zwischen seinen ersten und zweiten Zuständen schaltbar ist. Bei einer solchen Ausführungsform erfolgt die Einkopplung der Energie also unmittelbar in das optische Element 108.

Die Figur 2 zeigt eine alternative Ausführungsform eines erfindungsgemäßen Dokuments 100 mit einem Kopplungselement 114 zur Einkopplung von Energie für die Ansteuerung des optischen Elements 108. Das Kopplungselement 114 kann als kontaktbehaftete, kontaktlose oder Dual-Mode-Schnittstelle ausgeführt sein, insbesondere als Chipkarten-Schnittstelle oder RFID-Schnittstelle. Beispielsweise kann es sich bei dem Kopplungselement 114 um eine Antenne oder eine Spule handeln, um beispielsweise induktiv eine Spannung einzukoppeln, durch die das optische Element 108 in seinen zweiten Zustand versetzt wird.

Beispielsweise ist das Kopplungselement 114 mit einer Leitung 116 mit dem optischen Element 108 verbunden, um dieses anzusteuern und erforderlichenfalls mit Energie zu versorgen. Eine solche Anordnung bietet den Vorteil einer besonderen Sicherheit gegen Manipulationen, da sie nicht zerstörungsfrei aus dem Dokument 100 entfernt und in einen anderen Dokumentenkörper eingesetzt werden kann. Dies ist insbesondere dann der Fall, wenn die Leitung 116 innerhalb des Dokumentenkörpers verläuft. Der Dokumentenkörper des Dokuments 100 kann dabei papierbasiert und/oder kunststoffbasiert ausgeführt sein, beispielsweise in Form eines papierbasierten Reisedokuments oder einer Chipkarte.

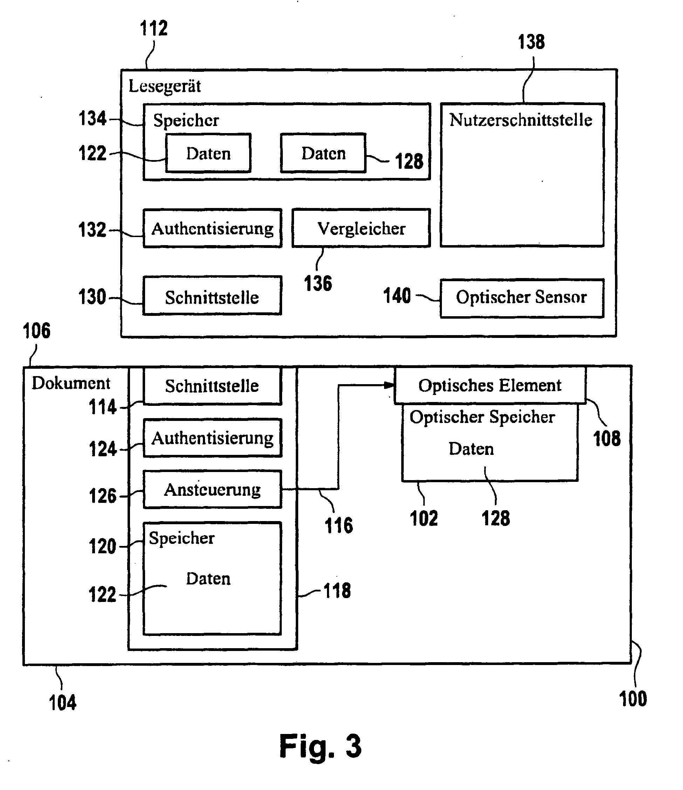

Die Figur 3 zeigt eine Ausführungsform eines erfindungsgemäßen Dokuments 100 mit einem integrierten elektronischen Schaltkreis 118, der in den Dokumentenkörper des Dokuments 100 integriert ist. Beispielsweise handelt es sich bei dem Dokument 100 in dieser Ausführungsform um ein MRDT, Insbesondere einen elektronischen Reisepass. Das Kopplungselement 114 des integrierten elektronischen Schaltkreises 118 ist beispielsweise als RFID-Schnittstelle ausgebildet. Der integrierte elektronische Schaltkreis 118 hat einen elektronischen Speicher 120 zur Speicherung von schutzbedürftigen Daten 122. Bei den schutzbedürftigen Daten 122 kann es sich um vertrauliche und/oder personenbezogene Daten handeln, insbesondere um biometrische Daten des Trägers des Dokuments 100, wie zum Beispiel Fingerabdruckdaten und/oder lris-Scan-Daten.

Der integrierte elektronische Schaltkreis 118 verfügt über eine Authentisierungsfunktion 124 zur Durchführung eines kryptographischen Protokolls für die Authentisierung eines Lesegeräts 112. Die Authentisierung dient zum Schutz der Daten 122, d.h. ein Zugriff auf die Daten 122 durch das Lesegerät 112 ist nur nach zuvoriger erfolgreicher Authentisierung des Lesegeräts 112 gegenüber dem integrierten elektronischen Schaltkreis 118 möglich. Zur Implementierung der Authentisierungsfunktion 124 kann der integrierte elektronische Schaltkreis 118 über einen Mikroprozessor verfügen, der zur Ausführung entsprechender Programminstruktionen dient.

Der integrierte elektronische Schaltkreis 118 hat ferner eine Ansteuerung 126 für ein optisches Element 108. Die Ansteuerung 126 dient zur Ansteuerung des optischen Elements 108 und erforderlichenfalls zur Übertragung eines Teils der über die Schnittstelle 114 eingekoppelten Energie an das optische Element 108, um dieses in seinen zweiten Zustand zu bringen, dort zu halten und/oder um es aus seinem zweiten Zustand wieder in den ersten Zustand zurückzubringen.

Das Sicherheitsmerkmal 102 ist in dieser Ausführungsform als optischer Speicher ausgebildet. Der optische Speicher kann durch einen Aufdruck, beispielsweise in Form eines Barcodes, realisiert sein, oder durch einen holographischen Speicher oder dergleichen.

Der optische Speicher des Sicherheitsmerkmals 102 dient zur Speicherung von Daten 128. Beispielsweise handelt es sich bei den Daten 128 um eine Kopie der Daten 122. Wenn es sich bei dem optischen Speicher um einen Speicher hoher Informationsdichte handelt, können dort auch weitere umfangreiche Daten gespeichert sein. Die Daten 122 und/oder 128 können verschlüsselt sein, sodass sie sich erst nach einer Entschlüsselung miteinander vergleichen lassen.

Zur Überprüfung des Sicherheitsmerkmals 102 und zum Auslesen der Daten 122 bzw. 128 dient das Lesegerät 112. Dies hat eine der Schnittstelle 114 entsprechende

Schnittstelle 130, beispielsweise also eine RFID-Schnittstelle, sowie eine der Authentisierungsfunktion 124 entsprechende Authentisierungsfunktion 132 zur Durchführung der das Lesegerät 112 betreffenden Schritte eines kryptographischen Protokolls.

Das Lesegerät 112 hat ferner einen elektronischen Speicher 134 zur Speicherung der aus dem Dokument 100 ausgelesenen Daten 122 und 128. Mit Hilfe einer Vergleicher funktion 136 des Lesegeräts 112 können die in dem Speicher 134 gespeicherten Daten 122 und 128 auf Übereinstimmung geprüft werden, wobei hierzu je nach Ausführungsform eine zuvorige Transformation der Daten 122 und/oder 128 erforderlich sein kann, beispielsweise eine Entschlüsselung mit Hilfe eines symmetrischen oder asymmetrischen Schlüssels.

Wenn die Vergleicherfunktion 136 zu dem Ergebnis kommt, dass die Daten 122 und 128 übereinstimmen, so werden diese über eine Nutzerschnittstelle 138 des Lesegeräts 112 ausgegeben und/oder zur Weiterverarbeitung freigegeben.

Zum Auslesen der Daten 128 aus dem optischen Speicher 102 verfügt das Lesegerät 112 über einen optischen Sensor 140 sowie - je nach der Ausgestaltung des optischen Speichers - erforderlichenfalls über eine Strahlungsquelle zur Erzeugung eines Lesestrahls, insbesondere eines Lasers, wenn es sich bei dem optischen Speicher beispielsweise um einen holographischen Speicher handelt.

Für einen Lesezugriff und zur Überprüfung des Sicherheitsmerkmals 102 muss sich das Lesegerät 112 zunächst gegenüber dem Dokument 100 bzw. dessen integrierten elektronischen Schaltkreis 118 authentisieren. Hierzu wird über die Schnittstellen 130 und 114 eine Kommunikationsverbindung hergestellt, beispielsweise mittels eines RFID-Verfahrens. Über diese Kommunikationsverbindung erfolgt ein Datenaustausch zwischen dem Lesegerät 112 und dem integrierten elektronischen Schaltkreis 118 mit Hilfe dessen das kryptographische Protokoll unter Verwendung der Authentisierungsfunktionen 132 bzw. 124 abgearbeitet wird. Nachdem die Authentisierung des Lesegeräts 112 gegenüber dem integrierten elektronischen Schaltkreis 118 abgeschlossen ist, wird dessen Ansteuerung 126 aktiviert, sodass diese das optische Element 108 über die Leitung 116 temporär in dessen zweiten Zustand schaltet. Ferner kann das Lesegerät 112 über dessen Schnittstelle 130 nach der erfolgreichen Authentisierung die Daten 122 aus dem Speicher 120 auslesen und in seinen Speicher 134 speichern.

Sobald sich das optische Element 108 in seinem zweiten Zustand befindet, kann das Lesegerät 112 mit seinem optischen Sensor 140 auf den optischen Speicher 102 lesend zugreifen, um die Daten 128 aus dem optischen Speicher 102 auszulesen und in seinem Speicher 134 abzuspeichern. Die in dem Speicher 134 gespeicherten Daten 122 und 128 werden daraufhin von dem Vergleicher 136 auf Übereinstimmung überprüft. Wenn eine Übereinstimmung der Daten 122 und 128 vorliegt, werden diese über die Nutzerschnittstelle 138 ausgegeben und/oder zur Weiterverarbeitung freigegeben.

Bei dem optischen Speicher des Sicherheitsmerkmals 102 kann es sich auch um einen wiederbeschreibbaren Speicher handeln, insbesondere einen wiederbeschreibbaren holographischen Speicher. Das optische Element 108 hat in diesem Fall den weiteren Vorteil, dass der optische Speicher vor Datenverlust geschützt wird, der aufgrund einer permanenten Lichteinstrahlung sonst erfolgen könnte.

Das Lesegerät 112 kann auch als Schreibgerät ausgebildet sein, um die Daten 122 in den elektronischen Speicher 120 bzw. die Daten 128 in den optischen Speicher des Sicherheitsmerkmals 102 zu schreiben, beispielsweise um diese zu aktualisieren. Eine solche Aktualisierung kann beispielsweise aufgrund eines Umzugs und einer damit einhergehenden Adressänderung des Trägers des Dokuments 100 erforderlich sein, um die entsprechenden Adressdaten, die als Teil der Daten 122 und 128 abgespeichert sind, zu aktualisieren.

Auch für einen solchen schreibenden Zugriff auf die Daten 122 bzw. 128 ist eine vorherige Authentisierung erforderlich. Die Strahlungsquelle, Insbesondere der Laser des Lesergeräts 112, wird in diesem Fall zum Schreiben der aktualisierten Daten in den optischen Speicher verwendet.

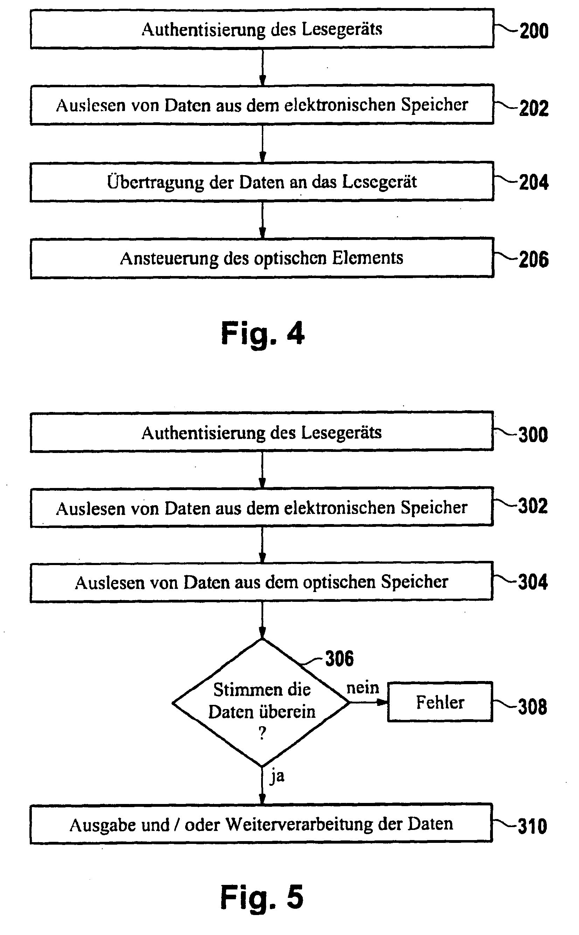

Die Figur 4 zeigt ein Flussdiagramm hinsichtlich der Abläufe in dem Dokument 100 der Ausführungsform der Figur 3. In dem Schritt 200 erfolgt eine Authentisierung des Lesegeräts gegenüber dem Dokument. Nachdem die Authentisierung erfolgreich stattgefunden hat, kann das Lesegerät die geschützten Daten aus dem elektronischen Speicher des Dokuments auslesen (Schritt 202) und an das Lesegerät übertragen (Schritt 204). Ferner wird nach der Authentisierung des Lesegeräts das optische Element des Dokuments angesteuert, um dieses temporär in seinen zweiten, im Wesentlichen transparenten Zustand zu bringen (Schritt 206), um einen optischen Zugriff auf dessen Sicher heitsmerkmal zu ermöglichen.

Die Figur 5 zeigt die entsprechende Arbeitsweise des Lesegeräts in der Ausführungsform der Figur 3. In dem Schritt 300 authentisiert sich das Lesegerät gegenüber dem Dokument. Nach der erfolgreichen Authentisierung kann das Lesegerät auf die geschützten Daten in dem elektronischen Speicher des Dokuments zugreifen, um diese auszulesen oder - eine entsprechende Berechtigung des Lesegeräts vorausgesetzt - zu verändern, um sie beispielsweise zu aktualisieren.

In dem Schritt 304 kann das Lesegerät nach dessen Authentisierung auf den optischen Speicher des Sicherheitsmerkmals lesend und/oder schreibend zugreifen, da ja aufgrund der erfolgreichen Authentisierung das optische Element des Dokuments temporär in dessen zweiten Zustand gebracht worden ist. Alternativ können die Schritte 302 und 304 auch gleichzeitig ausgeführt werden oder der Schritt 304 kann vor dem Schritt 302 ausgeführt werden.

In dem Schritt 306 überprüft das Lesegerät die ausgelesenen Daten auf Übereinstimmung. Wenn die Daten nicht oder nicht hinreichend übereinstimmen, wird in dem Schritt 308 eine Fehlermeldung beispielsweise über die Nutzerschnittstelle abgegeben. Stimmen die Daten dagegen überein, so werden die Daten in dem Schritt 310 über die Nutzerschnittstelle ausgegeben und/oder zur Weiterverarbeitung freigegeben.

### Bezugszeichenliste

- 100: Dokument
- 102: Sicherheitsmerkmal
- 104: Rückseite
- 106: Vorderseite
- 108: optisches Element
- 110: Benutzer
- 112: Lesegerät
- 114: Kopplungselement
- 116: Leitung
- 118: integrierter elektronischer Schaltkreis
- 120: elektronischer Speicher
- 122: Daten
- 124: Authentisierungsfunktion
- 126: Ansteuerungsfunktion
- 128: Daten
- 130: Schnittstelle
- 132: Authentisierungsfunktion
- 134: elektronischer Speicher
- 136: Vergleicherfunktion
- 138: Nutzerschnittstelle
- 140: optischer Sensor

## Patentansprüche

1. Dokument mit einem Sicherheitsmerkmal (102) und einem optischen Element (108), wobei das optische Element zwischen einem ersten, im Wesentlichen nicht-transparenten Zustand und einem zweiten, im Wesentlichen transparenten Zustand schaltbar ist, und wobei das optische Element so angeordnet ist, dass es in seinem ersten Zustand einen optischen Zugriff auf das Sicherheitsmerkmal verhindert, mit einem integrierten elektronischen Schaltkreis (118, 126) zum Schalten des optischen Elements, wobei der integrierte elektronische Schaltkreis Mittel (124) zur Authentisierung eines externen Lesegeräts (112) aufweist, wobei der integrierte elektronische Schaltkreis zum Schalten des optischen Elements in den zweiten Zustand ausgebildet ist, nachdem die Authentisierung erfolgt ist, um einen optischen Zugriff des Lesegeräts auf das Sicherheitsmerkmal zu ermöglichen, und wobei der integrierte elektronische Schaltkreis einen elektronischen Speicher (120) zur Speicherung von ersten Daten (122) aufweist, wobei das Sicherheitsmerkmal zweite (128), optisch auslesbare Daten beinhaltet, wobei die ersten und die zweiten Daten übereinstimmen, und wobei das Dokument eine Schnittstelle (114) hat, über die die ersten Daten nur nach der Authentisierung an das externe Lesegerät übertragen werden können .

2. Dokument nach Anspruch 1, wobei das optische Element durch Einkopplung von Energie von seinem ersten in seinen zweiten Zustand schaltbar ist.

3. Dokument nach Anspruch 2, wobei das optische Element zur Einkopplung der Energie ausgebildet ist.

4. Dokument nach Anspruch 2, mit einem Kopplungselement (114) zur Einkopplung der Energie, wobei das optische Element von dem Kopplungselement ansteuerbar ist.

5. Dokument nach Anspruch 2, mit einer kontaktbehafteten, einer kontaktlosen oder einer Dual-Mode-Schnittstelle (114), insbesondere einer Chipkarten-Schnittstelle oder einer RFID-Schnittstelle, zur Einkopplung der Energie.

6. Dokument nach einem der vorhergehenden Ansprüche, wobei das optische Element bistabil ist.

7. Dokument nach einem der vorhergehenden Ansprüche, wobei das optische Element semi-bistabil ist.

8. Dokument nach einem der vorhergehenden Ansprüche, wobei das optische Element eine elektrophoretische, elektrochrome, elektrostatische, Drehelement-, eine Electro-Wetting-, ferroelektrische und/oder Flüssigkeitskristall-Anzeigevorrichtung, insbesondere mit cholesterischen oder nematischen flüssigkeitskristallinen Materialien, ein mikroelektromechanisches System (MEMS), wie z.B. ein Mikroshutter-Array, aufweist.

9. Dokument nach Anspruch 8, wobei die Anzeigevorrichtung mehrere Anzeigeelemente aufweist, die jeweils einen Teilbereich des optischen Elements in den ersten oder zweiten Zustand versetzen, wobei die Anzeigevorrichtung zur kollektiven Ansteuerung der Anzeigeelemente ausgebildet ist, um diese insgesamt in den ersten oder den zweiten Zustand zu schalten.

10. Dokument nach einem der vorhergehenden Ansprüche, wobei es sich bei dem Sicherheitsmerkmal um eine Guilloche, Mikro-Schrift, ein metameres System, einen Aufdruck mit Fluoreszenz, Phosphoreszenz und/oder Up-Conversion-Farbe, einen Aufdruck mit Infrarot-Farbe, Optisch variable Farben (OVI - Optical Variable Ink), ein Hologramm oder Kinegramm (transparent oder reflektierend), ein Wasserzeichen, Passerdruck, ein Durchsichtsfenster, Melierfasern, einen Sicherheitsfaden und/oder eine Mikröperforationen handelt.

11. Dokument nach einem der vorhergehenden Ansprüche, wobei die ersten und zweiten Daten durch eine vorgegebene Transformationsvorschrift ineinander überführbar sind.

12. Dokument nach einem der vorhergehenden Ansprüche, wobei das Sicherheitsmerkmal als optischer Datenspeicher ausgebildet ist, insbesondere als holographischer Datenspeicher.

13. Dokument nach einem der vorhergehenden Ansprüche, wobei der elektronische Schaltkreis zur Schaltung des optischen Elements von dem zweiten Zustand in den ersten Zustand ausgebildet ist, nachdem sich das optische Element für einen vorgegebenen Zeitraum in dem zweiten Zustand befunden hat.

14. Dokument nach einem der vorhergehenden Ansprüche, wobei es sich um ein Wert- oder Sicherheitsdokument, insbesondere um ein maschinenlesbares Reise- oder Ausweisdokument, eine Chipkarte, einen Berechtigungsnachweis oder dergleichen handelt.

15. Lesegerät für ein Dokument (100) nach einem der vorhergehenden Ansprüche mit Mitteln zur Initiierung der Schaltung des optischen Elements (108) von dem ersten in den zweiten Zustand, um einen optischen Zugriff auf das Sicherheitsmerkmal des Dokuments zu ermöglichen, mit einem optischen Sensor (140)zur automatischen Erfassung des Sicherheitsmerkmals, mit Mitteln (132) zur Authentifizierung gegenüber einem integrierten elektronischen Schaltkreis (118) des Dokuments, Mitteln (130) zum Auslesen von ersten Daten (122) aus einem geschützten Speicherbereich (120) des integrierten Schaltkreises nach der Authentifizierung, wobei der optische Sensor zum Auslesen von zweiten Daten (128) aus dem Sicherheitsmerkmal des Dokuments ausgebildet ist, und mit Mitteln (136) zur Überprüfung der Übereinstimmung der ersten und zweiten Daten, wobei das Lesegerät zur Ausgabe und/oder Weiterverarbeitung der ersten und/oder zweiten Daten ausgebildet ist, nachdem deren Übereinstimmung festgestellt worden ist.

## Claims

1. Document having a security feature (102) and an optical element (108), wherein the optical element can be switched between a first, substantially non-transparent state and a second, substantially transparent state, and wherein the optical element is arranged such that, in its first state, it prevents optical access to the security feature, having an integrated electronic circuit (118, 126) for switching the optical element, wherein the integrated electronic circuit has means (124) for authenticating an external reader (112), wherein the integrated electronic circuit is configured for switching the optical element into the second state after authentication has been effected in order to permit the reader optical access to the security feature, and wherein the integrated electronic circuit has an electronic memory (120) for storing first data items (122), wherein the security feature contains second, optically readable data items (128), wherein the first and the second data items match, and wherein the document has an interface (114) via which the first data items can be transmitted to the external reader only after authentication has been effected.

2. Document according to Claim 1, wherein the optical element can be switched from its first into its second state by way of coupling in energy.

3. Document according to Claim 2, wherein the optical element is configured for coupling in the energy.

4. Document according to Claim 2, having a coupling element (114) for coupling in the energy, wherein the optical element can be driven by the coupling element.

5. Document according to Claim 2, having an interface (114) which is contact-based, contactless or is a dual-mode interface, in particular a smart card interface or an RFID interface, for coupling in the energy.

6. Document according to one of the preceding claims, wherein the optical element is bistable.

7. Document according to one of the preceding claims, wherein the optical element is semi-bistable.

8. Document according to one of the preceding claims, wherein the optical element has an electrophoretic display apparatus, electrochromic display apparatus, electrostatic display apparatus, twisting-element display apparatus, electrowetting display apparatus, ferroelectric display apparatus and/or liquid-crystal display apparatus, in particular with cholesteric or nematic liquid-crystal materials, a microelectromechanical system (MEMS) such as a microshutter array.

9. Document according to Claim 8, wherein the display apparatus has a plurality of display elements which place in each case one partial region of the optical element into the first or second state, wherein the display apparatus is configured for collectively driving the display elements in order to switch them together into the first or the second state.

10. Document according to one of the preceding claims, wherein the security feature is a guilloche, microinscription, a metameric system, a print with fluorescence, phosphorescence and/or up-conversion ink, a print with infrared ink, optically variable ink (OVI), a hologram or kinegram (transparent or reflective), a watermark, in-register printing, a through-window, mottled fibres, a security thread and/or microperforations.

11. Document according to one of the preceding claims, wherein the first and second data items can be converted into one another by a pre-specified transformation rule.

12. Document according to one of the preceding claims, wherein the security feature is configured as an optical data memory, in particular as a holographic data memory.

13. Document according to one of the preceding claims, wherein the electronic circuit is configured for switching the optical element from the second state into the first state after the optical element has been in the second state for a pre-specified period of time.

14. Document according to one of the preceding claims, wherein the document is a valuable or security document, in particular a machine-readable travel or identification document, a smart card, credentials or the like.

15. Reader for a document (100) according to one of the preceding claims, having means for initiating the switching of the optical element (108) from the first into the second state in order to enable optical access to the security feature of the document, having an optical sensor (140) for automatic detection of the security feature, having means (132) for authentication with respect to an integrated electronic circuit (118) of the document, means (130) for reading first data items (122) from a protected memory region (120) of the integrated circuit after the authentication, wherein the optical sensor is configured for reading second data items (128) from the security feature of the document, and having means (136) for checking the match between the first and the second data items, wherein the reader is configured for outputting and/or further processing the first and/or second data items after their match has been established.

## Revendications

1. Document comprenant un dispositif de sécurité (102) et d'un élément optique (108), dans lequel l'élément optique peut être amené à basculer entre un premier état sensiblement non transparent et un deuxième état sensiblement transparent, et dans lequel l'élément optique est conçu de telle manière que, dans son premier état, il empêche un accès optique au dispositif de sécurité, comprenant un circuit électronique intégré (118, 126) destiné à faire basculer l'élément optique, dans lequel le circuit électronique intégré comprend des moyens (124) destinés à authentifier un dispositif de lecture externe (112), dans lequel le circuit électronique intégré est conçu pour faire basculer l'élément optique dans le deuxième état après que l'authentification a été effectuée pour permettre un accès optique du dispositif de lecture au dispositif de sécurité, et dans lequel le circuit électronique intégré comprend une mémoire électronique (120) destinée à stocker des premières données (122), dans lequel le dispositif de sécurité contient des deuxièmes données (128) lisibles optiquement, dans lequel les premières et les deuxièmes données concordent mutuellement, et dans lequel le document présente une interface (114) par l'intermédiaire de laquelle les premières données ne peuvent être transmises au dispositif de lecture externe qu'après authentification.

2. Document selon la revendication 1, dans lequel l'élément optique peut être amené à basculer de son premier à son deuxième état par injection d'énergie.

3. Document selon la revendication 2, dans lequel l'élément optique est conçu pour l'injection d'énergie.

4. Document selon la revendication 2, comprenant un élément de couplage (114) destiné à l'injection d'énergie de telle manière que l'élément optique puisse être commandé par l'élément de couplage.

5. Document selon la revendication 2, comprenant une interface (114) avec contact, sans contact ou à bi-mode, notamment une interface pour carte à puce ou une interface RFID, permettant l'injection d'énergie.

6. Document selon l'une des revendications précédentes, dans lequel l'élément optique est bistable.

7. Document selon l'une des revendications précédentes, dans lequel l'élément optique est semi-bistable.

8. Document selon l'une des revendications précédentes, dans lequel l'élément optique comprend un dispositif d'affichage électrophorétique, électrochromique, électrostatique, à éléments tournants, à électromouillage, ferroélectrique et/ou à cristaux liquides, comprenant notamment des matériaux cristallins liquides cholestériques ou nématiques, un microsystème électromécanique (MEMS), comme par exemple une matrice de micro-obturateurs.

9. Document selon la revendication 8, dans lequel le dispositif d'affichage comprend plusieurs éléments d'affichage qui font chacun basculer une région partielle de l'élément optique dans le premier ou le deuxième état, dans lequel le dispositif d'affichage est conçu pour commander collectivement les éléments d'affichage afin de les faire basculer globalement dans le premier ou le deuxième état.

10. Document selon l'une des revendications précédentes, **caractérisé en ce que** le dispositif de sécurité est un guillochis, une micro-impression, un système métamérique, une impression en couleur fluorescente, phosphorescente et/ou de conversion ascendante, une impression en couleur avec un colorant infrarouge, des colorants optiquement variables (OVI - Optical Variable Ink), un hologramme ou un cinégramme (transparent ou réfléchissant), un filigrane, une impression de repères d'alignement, une fenêtre transparente, des fibres chinées, un fil de sécurité et/ou une microperforation.

11. Document selon l'une des revendications précédentes, dans lequel les première et seconde données peuvent être transformées les unes en les autres au moyen d'une règle de transformation prédéterminée.

12. Document selon l'une des revendications précédentes, dans lequel le dispositif de sécurité est réalisé sous la forme d'une mémoire de données optique, notamment d'une mémoire de données holographique.

13. Document selon l'une des revendications précédentes, dans lequel le circuit électronique est conçu de manière à faire basculer l'élément optique du deuxième état au premier état après que l'élément optique se soit trouvé dans le deuxième état pendant un intervalle de temps prédéterminé.

14. Document selon l'une des revendications précédentes, **caractérisé en ce qu'**il s'agit d'un document de valeur ou de sécurité, notamment d'un document de voyage ou d'identité lisible par machine, d'une carte à puce, d'une preuve d'autorisation ou autre.

15. Dispositif de lecture destiné à un document (100) selon l'une des revendications précédentes, comprenant des moyens destinés à déclencher le basculement de l'élément optique (108) du premier au deuxième état afin de permettre un accès optique à la caractéristique de sécurité du document, comprenant un capteur optique (140) destiné à détecter automatiquement le dispositif de sécurité, des moyens (132) destinés à effectuer une authentification vis-à-vis d'un circuit électronique intégré (118) du document, des moyens (130) destinés à lire des premières données (122) depuis une région de mémoire protégée (120) du circuit intégré après authentification, dans lequel le capteur optique est conçu de manière à lire des deuxièmes données (128) depuis le dispositif de sécurité du document, et des moyens (136) destinés à tester la concordance entre les premières et les deuxièmes données, dans lequel le dispositif de lecture est conçu de manière à fournir et/ou effectuer un post-traitement des premières et/ou deuxièmes données après qu'il a été établi qu'elles concordaient.
